# EUROPÄISCHE PATENTSCHRIFT

(11) **EP 3 628 162 B1**
(45) Veröffentlichungstag und Bekanntmachung des Hinweises auf die Patenterteilung: **26.03.2025**
(21) Anmeldenummer: 19193804.2
(22) Anmeldetag: 27.08.2019
(51) Int. Cl.: A21B 3/04, F24C 15/00, F24C 15/32

(54) **GARGERÄT MIT DAMPFGARFUNKTION**
COOKING DEVICE WITH STEAM COOKING FUNCTION
APPAREIL DE CUISSON À FONCTION DE CUISSON À VAPEUR

(30) Priorität: 25.09.2018 DE 102018123561
(43) Veröffentlichungstag der Anmeldung: 01.04.2020
(73) Patentinhaber: Miele & Cie. KG, 33332 Gütersloh (DE)
(72) Erfinder: Zerbian, Thomas, 49124 Georgsmarienhütte (DE); Dohmen, Anja, 33739 Bielefeld (DE); Oberhaus, Jens, 32130 Enger (DE)

(56) Entgegenhaltungen:
- EP-B1- 2 469 191
- DE-A1- 102010 043 490
- DE-A1- 102014 217 024
- DE-A1- 102016 211 580
- GB-A- 378 353
- US-A- 5 103 800

## Beschreibung

Die Erfindung betrifft ein Gargerät mit Dampfgarfunktion.

Zu den Möglichkeiten der Zubereitung von Lebensmitteln gehört das Dampfgaren oder auch Dämpfen, bei dem die zuzubereitenden Lebensmittel mittels Dampf gegart werden. Entsprechende Gargeräte können als Dampfgargeräte bezeichnet werden. Hierzu gehören neben den elektrischen Dampfgarern mit stapelbaren Dampfkörben als üblicherweise einzelne Standgeräte auch Dampfgarer in Form von Einbaugeräten. Die Dampfgarfunktion kann dabei die einzige Funktion eines derartigen Gargeräts sein oder eine zusätzliche Funktion z.B. eines Backofens, welcher dann als Dampfbackofen bezeichnet werden kann. Dampfbacköfen und Dampfgarer können auch unter dem Begriff Gargerät mit Dampfgarfunktion zusammengefasst werden, wobei dieser Begriff auch weitere entsprechende Gargeräte umfassen kann.

Gargeräte mit Dampfgarfunktion sind als Einbaugeräte üblicherweise horizontal in eine Küchenzeile eingesetzt und für den Benutzer von Vorne zugänglich. Das Gehäuse derartiger Gargeräte ist üblicherweise in die Küchenzeile feststehend montiert. Im Gehäuse ist der Garraum vorgesehen, welcher üblicherweise durch eine Garraumklappe verschlossen werden kann, welche üblicherweise zum Benutzer hin nach unten in die Horizontale geschwenkt werden kann, um dem Benutzer den Zugriff auf den Garraum zu ermöglichen. Die zuzubereitenden Lebensmittel können im Garraum angeordnet und im Betrieb des Gargeräts mit Dampfgarfunktion von heißem Dampf umgeben werden, um gegart zu werden. Der Dampf kann von einer Dampfquelle des Gargeräts wie z.B. von einem Dampferzeuger des Gargeräts erzeugt und über einen Dampfeinlass in den Garraum eingespeist werden.

Bekannt ist diesbezüglich von verschiedenen Herstellern, in einer der beiden Seitenwände des Garraums einen einzigen Dampfeinlass vorzusehen, um den Dampf in den Garraum einzuspeisen. Eine derartige Anordnung ist beispielsweise in der Druckschrift US 5 103 800 A offenbart. Ein Dampfeinlass kann auch an anderen Begrenzungswänden eines Garraumes angeordnet sein. So zeigt die DE 10 2010 043 490 A1 die Positionierung des Dampfeinlasses an der Deckenwand des Garraumes.

Bei den in den Druckschriften DE 10 2016 211 580 A1 und DE 10 2014 217 024 A1 gezeigten Dampfgargeräten ist der Dampfeinlass an der Garraumrückwand angeordnet. Auch ist es von den Dampfgargeräten der Generation 6000 der Anmelderin bekannt, den Dampfeinlass an der Rückwand des Garraums anzuordnen und dabei acht verteilt angeordnete Dampfeinlässe zu verwenden, um eine gleichmäßigere Dampfverteilung zu erreichen. Das Prinzip dieser Art der Dampfzuführung ist der EP 2 469 191 A1 zu entnehmen.

Nachteilig ist bei dem Gargerät der EP 2 469 191 A1, dass dort die acht Dampfeinlässe in einem Kunststoffbauteil ausgebildet sind, welches an der Garraumrückwand angeordnet ist. Übliche Kunststoffe sind jedoch nicht mikrowellenbeständig, so dass ein derartiges Gargerät keine Mikrowellenfunktion aufweisen kann.

Um dies zu erreichen, wäre ein mikrowellenbeständiger Kunststoff für das Kunststoffbauteil mit den acht Dampfeinlässen des Gargeräts der EP 2 469 191 A1 zu verwenden. Da die Auswahl derartiger Kunststoff jedoch begrenzt ist, kann dies zu erhöhten Kosten führen. Auch können die Gestaltungsmöglichkeiten durch die begrenzte Auswahl an mikrowellenbeständigen Kunststoffen eingeschränkt werden.

Zu beachten ist hierbei, dass zu erwarten ist, dass die Anforderungen an die Zulassung von Kunststoffen als mikrowellengeeignet zukünftig steigen werden, so dass sich der Aufwand, einen mikrowellengeeigneten Kunststoff für derartige Gargerät mit Dampfgarfunktion zu finden, weiter erhöhen bzw. sich die Auswahl mikrowellengeeigneter Kunststoffe für derartige Gargerät mit Dampfgarfunktion weiter reduzieren wird.

Der Erfindung liegt die objektive technische Aufgabe zugrunde, eine gleichmäßigere Dampfverteilung im Garraum zu erreichen.

Erfindungsgemäß wird dieses Problem durch ein Gargerät mit Dampfgarfunktion mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die vorliegende Erfindung ein Gargerät mit Dampfgarfunktion mit einem Garraum, welcher ausgebildet ist, zuzubereitende Lebensmittel aufzunehmen, wobei der Garraum im Wesentlichen von einem Gehäuse umschlossen wird, mit einer Dampfquelle, welche ausgebildet ist, Dampf zur Zubereitung des Lebensmittels zu erzeugen, und mit wenigstens einem Dampfeinlasselement, welches ausgebildet und angeordnet ist, zumindest einen Teil des Dampfes der Dampfquelle durch das Gehäuse hindurch in den Garraum zu führen. Das Gargerät mit Dampfgarfunktion ist dadurch gekennzeichnet, dass das Dampfeinlasselement zumindest abschnittsweise zumindest im Wesentlichen aus Metall, vorzugsweise aus Edelstahl, ausgebildet ist, vorzugsweise besteht.

Mit anderen Worten wird das Dampfeinlasselement zumindest abschnittsweise aus einem metallischen Material anstelle von Kunststoff ausgebildet. Hierdurch kann eine Mikrowellentauglichkeit des Dampfeinlasselements und damit des Gargeräts mit Dampfgarfunktion an sich erreicht werden. Auf diese Art und Weise kann das Gargerät mit Dampfgarfunktion eine Mikrowellenfunktion als weitere Funktion aufweisen. Hierzu kann das Dampfeinlasselement zumindest im Wesentlichen aus Metall ausgebildet sein, um diese Funktion zu erreichen. Vorzugsweise besteht das Dampfeinlasselement aus Metall, so dass diese Wirkung verstärkt werden kann. Vorzugsweise kann hierfür jeweils Edelstahl verwendet werden, um die zuvor beschriebenen Eigenschaften zu erreichen und gleichzeitig eine robuste, langlebige und bzw. oder für den Benutzer optisch ansprechende Erscheinung zu schaffen.

Erfindungsgemäß weist das Dampfeinlasselement ein Öffnungselement auf, welches zumindest abschnittsweise im Inneren des Garraums angeordnet ist. Vorzugsweise ist das Dampfeinlasselement als Düse ausgestaltet. Zumindest der im Garraum angeordnete Abschnitt des Öffnungselements ist zumindest im Wesentlichen aus Metall, vorzugsweise aus Edelstahl, ausgebildet. Das Öffnungselement ist vorzugsweise als Schraube mit einem Außengewinde und einer axialen Durchgangsöffnung ausgebildet, wobei das Außengewinde in ein Aufnahmeelement des Dampfeinlasselements eingreift.

Das Öffnungselement bildet den Abschnitt des Dampfeinlasselements, durch welchen hindurch der Dampf in den Garraum eingeführt wird.

Auf diese Art und Weise können die zuvor beschriebenen Eigenschaften des Dampfeinlasselements, welche unter anderem eine Mikrowellentauglichkeit ermöglichen können, in dem Garraum des Gargeräts mit Dampfgarfunktion erreicht werden, wo diese zum Tragen kommen können. Die übrigen Bestandteile des Dampfeinlasselements können abweichend gestaltet sein, wie weiter unten noch näher beschrieben wird, um andere Eigenschaften und Vorteile aufzuweisen. Dabei das Dampfeinlasselement vorzugsweise als Düse auszubilden kann dahingehend vorteilhaft sein, dass ein höherer Druck bzw. eine höhere Austrittsgeschwindigkeit des Dampfes in den Garraum erreicht werden kann, da bei einer Düse eine Verringerung des Durchmessers auftritt und hierdurch eine Druckerhöhung erreicht werden kann. Diese kann vorzugsweise in Kombination mit einem starken Dampferzeuger des Gargeräts mit Dampfgarfunktion von beispielsweise 3,3 kW erreicht werden.

Erfindungsgemäß weist das Öffnungselement wenigstens eine Durchgangsöffnung auf, welche ausgebildet ist, Dampf der Dampfquelle durch das Gehäuse hindurch in den Garraum zu führen, wobei das Verhältnis zwischen der Länge des Öffnungselements und des Durchmessers der Durchgangsöffnung des Öffnungselements derart gewählt ist, dass zumindest im Wesentlichen keine Mikrowellenstrahlung durch die Durchgangsöffnung des Öffnungselements hindurch in den Garraum hinausgelangen kann. Hierdurch kann eine Mikrowellendichtigkeit des Öffnungselements bzw. dessen Durchgangsöffnung erreicht werden, was der Mikrowellentauglichkeit des Gargeräts mit Dampfgarfunktion zugutekommen kann. Dies wird insbesondere dadurch erreicht, dass die Durchgangsöffnung des Öffnungselements einen mittleren Durchmesser von weniger als 4 Millimeter, vorzugsweise von ungefähr 3 Millimeter aufweist, und die Länge der Durchgangsöffnung in dem aus Metall gefertigten Öffnungselement wenigstens 9 Millimeter, vorzugsweise mehr als 12 Millimeter, in der gezeigten Ausführungsform 15 Millimeter aufweist. Es hat sich in der Praxis als sinnvoll erwiesen, dass der Durchmesser nicht kleiner als 1,5 Millimeter ist und die Länge nicht 40 Millimeter übersteigt. Erfindungsgemäß weist das Dampfeinlasselement ein Aufnahmeelement auf, welches das Öffnungselement aufnimmt und hält, wobei das Aufnahmeelement zumindest im Wesentlichen, vorzugsweise vollständig, außerhalb des Garraums angeordnet ist. Auf diese Art und Weise kann, wie bereits zuvor angesprochen, das Dampfeinlasselement wenigstens zweiteilig ausgeführt werden und ein Öffnungselement, wie zuvor beschrieben, sowie ein anders gestaltetes und aus einem anderen Material ausgebildetes Aufnahmeelement aufweisen. Während die Mikrowellentauglichkeit über das Öffnungselement, welches zumindest teilweise im Garraum des Gargeräts mit Dampfgarfunktion angeordnet ist, bzw. dessen Eigenschaften realisiert werden kann, kann auf diese Eigenschaften bei dem Aufnahmeelement verzichtet werden. Auf diese Art und Weise kann das Aufnahmeelement anders und insbesondere kostengünstiger hinsichtlich der Konstruktion und bzw. oder seines Materials gestaltet werden, um das Dampfeinlasselement insgesamt vielfältiger gestalten und bzw. oder kostengünstiger herstellen zu können.

Gemäß einem weiteren Aspekt der vorliegenden Erfindung weist das Öffnungselement einen Kopfbereich auf, welcher sich von innerhalb des Garraums gegen das Gehäuse abstützt, und das Aufnahmeelement stützt sich von außerhalb des Garraums gegen das Gehäuse ab. Auf diese Art und Weise kann das Dampfeinlasselement an dem Gehäuse bzw. beidseitig an einer entsprechenden Durchgangsöffnung befestigt werden, indem von der Innenseite des Garraums das Öffnungselement mit seinem Kopfbereich, welcher hierzu zumindest abschnittsweise großflächiger ausgestaltet sein kann als die Durchgangsöffnung des Gehäuses, anliegen kann, so dass das Aufnahmeelement, welches ebenfalls zumindest abschnittsweise großflächiger ausgestaltet sein kann als die Durchgangsöffnung des Gehäuses, von der Innenseite des Gehäuses an das Öffnungselement anliegen kann. Mit anderen Worten kann das Dampfeinlasselement auf diese Art und Weise mittels seines Öffnungselements und seines Aufnahmeelements beidseitig der Durchgangsöffnung des Gehäuses an dem Gehäuse klemmend befestigt werden. Auf diese Art und Weise kann auf zusätzliche Halterungs- und Befestigungsmittel des Dampfeinlasselements verzichtet werden, was die Montage vereinfachen und bzw. oder Kosten bei der Herstellung des Dampfeinlasselements sowie dessen Materialien einsparen kann.

Gemäß einem weiteren Aspekt der vorliegenden Erfindung ist das Aufnahmeelement zumindest abschnittsweise, vorzugsweise im Wesentlichen, vorzugsweise vollständig, aus Kunststoff ausgebildet. Auf diese Art und Weise können vielfältige Materialien aus dem Bereich der Kunststoffe zur Herstellung des Aufnahmeelements verwendet werden, um die jeweiligen Eigenschaften nutzen zu können. Insbesondere kann mittels eines Kunststoffteils, insbesondere mittels eines durch ein Spritzgussverfahren hergestellten Kunststoffteils, eine besonders kostengünstige Herstellung des Aufnahmeelements realisiert werden. Die Eigenschaften des Kunststoffmaterials sind hierbei für das Aufnahmeelement bzw. das Dampfeinlasselement und dessen Mikrowelleneignung nicht hinderlich, da das Aufnahmeelement durch das metallische Öffnungselement gegenüber dem Garraum abgeschirmt wird, so dass in dem Garraum Mikrowellenstrahlung verwendet werden kann.

Gemäß einem weiteren Aspekt der vorliegenden Erfindung weist das Öffnungselement ein Außengewinde, vorzugsweise ein selbstschneidendes Außengewinde, auf, wobei vorzugsweise das Aufnahmeelement ein Innengewinde aufweist. Auf diese Art und Weise kann das Öffnungselement mittels seines Außengewindes in das Aufnahmeelement eingeschraubt werden, um eine einfache, sichere und haltbare Verbindung herzustellen. Hierzu kann vorzugsweise ein selbstschneidendes Außengewinde des Öffnungselements verwendet werden, um in das Aufnahmeelement bzw. eine in diesem vorgesehene Aussparung ein Innengewinde einschneiden zu können, was auf diese Art und Weise zu einer besonders hohen Haltbarkeit der Verbindung führen und das separate Ausbilden eines Innengewindes in dem Aufnahmeelement überflüssig machen kann. Das Aufnahmeelement kann hierzu vorzugsweise aus einem Kunststoff ausgebildet sein, in den das metallische Außengewinde des Öffnungselements einschneiden kann. Alternativ kann das Aufnahmeelement auch ein Innengewinde aufweisen, in welches das Außengewinde des Öffnungselements eingreifen kann. Auch hierdurch kann eine sichere und haltbare Verbindung geschaffen werden, wobei das Einschrauben des Öffnungselements in das Aufnahmeelement aufgrund der vorgefertigten korrespondierenden Gewinde mit weniger Kraftaufwand als zuvor beschrieben erfolgen kann.

Gemäß einem weiteren Aspekt der vorliegenden Erfindung ist zwischen dem Öffnungselement und dem Aufnahmeelement wenigstens ein Dichtelement, vorzugsweise ein O-Ring, angeordnet und bzw. oder ist zwischen dem Gehäuse und dem Aufnahmeelement wenigstens ein Dichtelement, vorzugsweise ein O-Ring, angeordnet. Auf diese Art und Weise kann an der jeweiligen Stelle des Dampfeinlasselements zwischen den entsprechenden Elementen eine zusätzliche Dichtigkeit insbesondere gegen Dampfaustritt durch das jeweilige Dichtelement hergestellt werden. Dabei können vorzugsweise auch beide Dichtelemente an den jeweiligen Stellen verwendet werden, um eine möglichst hohe Dichtigkeit und insbesondere eine möglichst hohe Dampfdichtigkeit zu erreichen. Hierzu O-Ringe als Dichtelemente zu verwenden kann eine besonders einfache und kostengünstige Möglichkeit zur Realisierung dieser Dichtigkeit darstellen.

Erfindungsgemäß weist das Aufnahmeelement wenigstens eine Durchgangsöffnung auf, welche ausgebildet ist, Dampf der Dampfquelle dem Öffnungselement zuzuführen, wobei die Durchgangsöffnung zum Öffnungselement hin sich verjüngend ausgebildet ist. Auf diese Art und Weise kann eine Zuführung von Dampf seitens der Dampfquelle durch das Aufnahmeelement hindurch zum Öffnungselement hin und durch dieses hindurch in den Garraum erfolgen. Dabei die Durchgangsöffnung des Aufnahmeelements sich verjüngend auszubilden, ermöglicht es, dass hierdurch eine Druckerhöhung und damit eine Erhöhung der Austrittsgeschwindigkeit des Dampfes wie bei einer Düse erreicht wird.

Gemäß einem weiteren Aspekt kann es vorteilhaft sein, dass die Durchgangsöffnung des Aufnahmeelements und auch die Durchgangsöffnung des Öffnungselements als Düse ausgebildet sind, so dass der Dampf bereits im Aufnahmeelement in der Austrittsgeschwindigkeit erhöht werden kann, welche durch eine Düsenwirkung des Öffnungselements weiter verstärkt werden kann.

Erfindungsgemäß ist das Aufnahmeelement mit wenigstens einer Dampfleitung verbunden, vorzugsweise mittels eines Halteelements. Auf diese Art und Weise kann über die Dampfleitung eine Zuführung von Dampf, zum Beispiel von einer Dampfquelle des Gargeräts mit Dampfgarfunktion, wie zum Beispiel von einem Dampferzeuger, erfolgen. Die Dampfleitung kann auch als Schlauch realisiert werden. Hierdurch kann die Dampfquelle zum Dampfeinlasselement beabstandet angeordnet und diese mittels der Dampfleitung verbunden werden, so dass die Anordnung der Dampfquelle flexibler gestaltet werden kann. Dies kann insbesondere eine bessere Ausnutzung des Bauraums des Gargeräts mit Dampfgarfunktion ermöglichen. Die Dampfleitung dabei über ein Halteelement des Aufnahmeelements an diesem zu befestigen, kann dahingehend vorteilhaft sein, dass eine sichere Halterung und insbesondere eine dampfdichte Halterung hergestellt werden kann. Das Halteelement kann beispielsweise über wenigstens einen Widerhaken, Rastelement, Vorsprung oder Hinterschnitt realisiert werden, welche insbesondere in Kombination mit einer Schelle und dergleichen wirken können. Hierdurch kann eine einfache und schnelle Montage bei gleichzeitig sicherem Halt erreicht werden.

Gemäß einem weiteren Aspekt der vorliegenden Erfindung ist das Dampfeinlasselement an einer Wandung, vorzugsweise an einer Flanke einer Verprägung einer Wandung, des Gehäuses derart angeordnet, so dass das Dampfeinlasselement den Dampf zumindest im Wesentlichen in einem Winkel zur Wandung des Gehäuses in den Garraum führen kann, wobei der Winkel ungleich 90° ist. Der Winkel zwischen der Richtung der Einführung des Dampfes in den Garraum und der Wandung des Gehäuses ist zu messen zwischen der Mittellängsachse des Strömungsweges des Dampfeinlasselements und der Erstreckungsebene der gesamten Wandung des Gehäuses. Dieser Neigung ist nicht auf einen einzigen Winkel festgelegt. Der Bereich möglicher Winkel sollte nicht kleiner sein als 15°, vorzugsweise beginnen bei 20°, besonders bevorzugt seine untere Grenze bei 30° haben. Der Bereich möglicher Winkel sollte nicht größer sein als 65°, vorzugsweise enden bei 60°, besonders bevorzugt seine obere Grenze bei 50° haben. Eine besonders günstige Ausführungsform scheint ein Winkel von 40° mit einer Abweichung hierzu von bis zu 5° in beide Richtungen zu sein.

Gemäß einem weiteren Aspekt ist die Mittellängsachse des Strömungsweges des Dampfeinlasselements und somit der Winkel vorzugsweise in der Horizontalen und/oder parallel zur Erstreckungsebene des Garraumbodens ausgerichtet.

Mit anderen Worten kann der Winkel zwischen dem Dampfeinlasselement bzw. dessen Öffnungselement bzw. dessen Durchgangsöffnung, welche die Strömungsrichtung des Dampfes bei Austritt aus dem Dampfeinlasselement bestimmt, gegenüber der Wandung und insbesondere gegenüber der Verprägung der Wandung des Gehäuses dadurch umgesetzt werden, indem die Wandung in diesem Bereich gegenüber dem übrigen Bereich der Wandung um den Winkel geneigt ist. Dies kann zu einer Strömungsrichtung des Dampfes in den Garraum hinein führen, welche nicht, wie bisher bekannt, rechtwinklig zu einer Seite der Wandung des Garraums ist, sondern um den o.g. Winkel zu dieser geneigt. Dies kann zu einer stärkeren Zirkulation und Verwirbelung des Dampfes im Garraum führen, so dass der gesamte Innenraum gleichmäßiger von dem Dampf erreicht werden kann als bisher bekannt. Hierdurch kann eine gleichmäßigere Dampfverteilung und damit auch Garung der dort befindlichen Lebensmittel erreicht werden.

Zu diesem Zweck kann es ausreichend sein, den Winkel ungleich 90° zu wählen, so dass die zuvor beschriebene Verwirbelung erreicht werden kann. Diesen Winkel über die zuvor genannten Winkelbereiche hin zu einem optimalen Winkel von 40° einzustellen kann die zuvor beschriebene Wirkung begünstigen und zuverlässig umsetzbar machen. Dabei den Winkel vorzugsweise in der Horizontalen auszurichten kann eine besonders gleichmäßige Dampfverteilung erreichen, da diese im Wesentlichen in der Horizontalen stattfinden und durch die Wärme des Dampfes vertikal nach oben aufsteigen kann, so dass sich die in der Horizontalen ausgebildete gleichmäßige Dampfverteilung in der Höhe über den gesamten Garraum fortsetzen kann. Dies kann eine besonders homogene Dampfverteilung innerhalb des Garraums, wie zuvor beschrieben, mit den entsprechenden Eigenschaften und Vorteilen ermöglichen.

Gemäß einem weiteren Aspekt der vorliegenden Erfindung ist das Dampfeinlasselement derart ausgebildet, dass das Dampfeinlasselement den Dampf zumindest im Wesentlichen in einem Winkel zu einer Wandung, vorzugsweise zu einer Flanke einer Verprägung einer Wandung, des Garraums in den Garraum führen kann, wobei der Winkel ungleich 90°, vorzugsweise zwischen 15° und 65°, vorzugsweise zwischen 20° und 60°, vorzugsweise zwischen 30° und 50°, vorzugsweise 40°, beträgt, wobei der Winkel vorzugsweise in der Horizontalen ausgerichtet ist. Mit anderen Worten können die zuvor beschriebenen Eigenschaften auch dadurch erreicht werden, dass das Dampfeinlasselement selbst einen Winkel in dem Verlauf der Dampfführung aufweist, welcher vorzugsweise in einem Kopfbereich des Öffnungselements dafür sorgt, dass die Durchgangsöffnung des Öffnungselements um den Winkel gegenüber dem Körperbereich des Öffnungselements geneigt ist. Auch dies kann zu den Eigenschaften und Vorteilen, wie zuvor beschrieben, führen.

Dabei besteht auch die Möglichkeit, die beiden zuvor beschriebenen Winkel des Dampfeinlasselements miteinander zu kombinieren, indem zum einen das Dampfeinlasselement an einer Wandung schräg bzw. ungleich 90° zu der Wandung angeordnet wird und gleichzeitig das Dampfeinlasselement mit dem Winkel ausgebildet ist. In diesem Fall können sich bei einer horizontalen Anordnung die beiden Winkel miteinander addieren und zu einer entsprechenden Umlenkung des Dampfes in den Innenraum führen. Hierbei ist es auch denkbar, den Winkel der Wandung in der Horizontalen anzuordnen und das Dampfeinlasselement mit seinem Winkel vertikal auszurichten, so dass über die abgewinkelte Durchgangsöffnung des Öffnungselements der Dampf zusätzlich vertikal nach oben abgewinkelt geführt werden kann. Auch dies kann zu einer Verteilung des Dampfes führen, welche gleichmäßiger als bisher bekannt sein kann.

Gemäß einem weiteren Aspekt der vorliegenden Erfindung ist das Dampfeinlasselement an einer Garraumrückwand des Gehäuses angeordnet. Auf diese Art und Weise kann eine möglichst gleichmäßige Dampfverteilung in den Garraum hinein über das Dampfeinlasselement erreicht werden.

Gemäß einem weiteren Aspekt der vorliegenden Erfindung weist das Gargerät mit Dampfgarfunktion wenigstens zwei Dampfeinlässe auf, wobei die Winkel der beiden Dampfeinlasselemente vorzugsweise voneinander weg ausgerichtet sind. Durch die Verwendung von mehreren Dampfeinlasselementen kann eine gleichmäßigere Dampfverteilung erreicht werden, da der Dampf auf diese Art und Weise an mehreren unterschiedlichen Stellen in den Garraum eingeleitet werden kann. Auch kann bei entsprechender Ausbildung der Durchgangsöffnungen der Dampfeinlasselemente zum Sicherstellen der entsprechenden Mikrowellendichtigkeit dennoch über die Erhöhung der Anzahl der Dampfeinlasselemente eine ausreichende Menge von Dampf gleichzeitig in den Garraum eingeleitet werden, um den gewünschten Gareffekt zu erreichen. Dabei die Dampfeinlasselemente vorzugsweise voneinander weg auszurichten, kann dahingehend vorteilhaft sein, dass eine homogenere und gleichmäßigere Verteilung des Dampfes im Garraum erreicht werden kann.

Gemäß einem weiteren Aspekt der vorliegenden Erfindung ist das Dampfeinlasselement in der Höhe oberhalb einer ersten Aufnahmeebene und unterhalb einer zweiten Aufnahmeebene angeordnet, wobei die erste Aufnahmeebene vorzugsweise die unterste Aufnahmeebene ist. Unter einer Aufnahmeebene wird eine Halterung im Innenraum des Garraums verstanden, in welcher Zubehörteile des Gargeräts mit Dampfgarfunktion, wie zum Beispiel eine Tropfwanne oder ein Gargutbehälter bzw. ein Gargutträger, aufgenommen werden können. Dabei das Dampfeinlasselement zwischen zwei derartigen Ebenen anzuordnen, kann dahingehend vorteilhaft sein, dass die Verteilung des Dampfes nicht durch die Zubehörteile des Gargeräts mit Dampfgarfunktion behindert werden, sondern in der Horizontalen durch diese hindurchströmen kann. Hierdurch kann eine bessere und schnellere Verteilung des Dampfes im Garraum erreicht werden.

Dabei das Dampfeinlasselement in der Höhe oberhalb der untersten Aufnahmeebene anzuordnen, kann dahingehend vorteilhaft sein, da in der untersten Aufnahmeebene üblicherweise eine Tropfwanne angeordnet wird. In der darüberliegenden zweiten Aufnahmeebene und gegebenenfalls in weiteren darüber angeordneten Aufnahmeebenen werden üblicherweise Gargutbehälter bzw. Gargutträger angeordnet, welche üblicherweise mit einem dampfdurchlässigen Boden ausgestattet sind. Auf diese Art und Weise kann der Dampf unterhalb des untersten Gargutbehälters eingeführt sowie horizontal gleichmäßig verteilt werden, um von dort vertikal aufzusteigen und die Gargutbehälter zu erreichen, so dass die dort befindlichen zuzubereitenden Lebensmittel von dem Dampf auch von unten erreicht werden können. Hierdurch kann verhindert werden, dass die Abtropfwanne der Verteilung und Strömung des Dampfes hinderlich wirken kann.

Mehrere Ausführungsbeispiele der Erfindung sind in den Zeichnungen rein schematisch dargestellt und werden nachfolgend näher beschrieben. Es zeigt
- Figur 1: eine Seitenansicht eines Gargeräts mit Dampfgarfunktion gemäß eines ersten Ausführungsbeispiels;
- Figur 2: eine Rückseitenansicht des Gargeräts mit Dampfgarfunktion der Fig. 1;
- Figur 3: einen Längsschnitt des Gargeräts mit Dampfgarfunktion der Fig. 1;
- Figur 4: eine innenseitige Ansicht der Garraumrückwand des Gargeräts mit Dampfgarfunktion der Fig. 1;
- Figur 5: eine Detailansicht der Garraumrückwand des Gargeräts mit Dampfgarfunktion der Fig. 1 von oben;
- Figur 6: einen horizontalen Schnitt des Garraums des Gargeräts mit Dampfgarfunktion der Fig. 1;
- Figur 7: eine Schnittansicht eines Dampfeinlasselements des Gargeräts mit Dampfgarfunktion gemäß des ersten Ausführungsbeispiels;
- Figur 8: eine Seitenansicht eines Dampfeinlasselements des Gargeräts mit Dampfgarfunktion gemäß eines zweiten Ausführungsbeispiels;
- Figur 9: eine Draufsicht auf das Dampfeinlasselement der Fig. 8; und
- Figur 10: einen horizontalen Schnitt des Dampfeinlasselements der Fig. 8.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

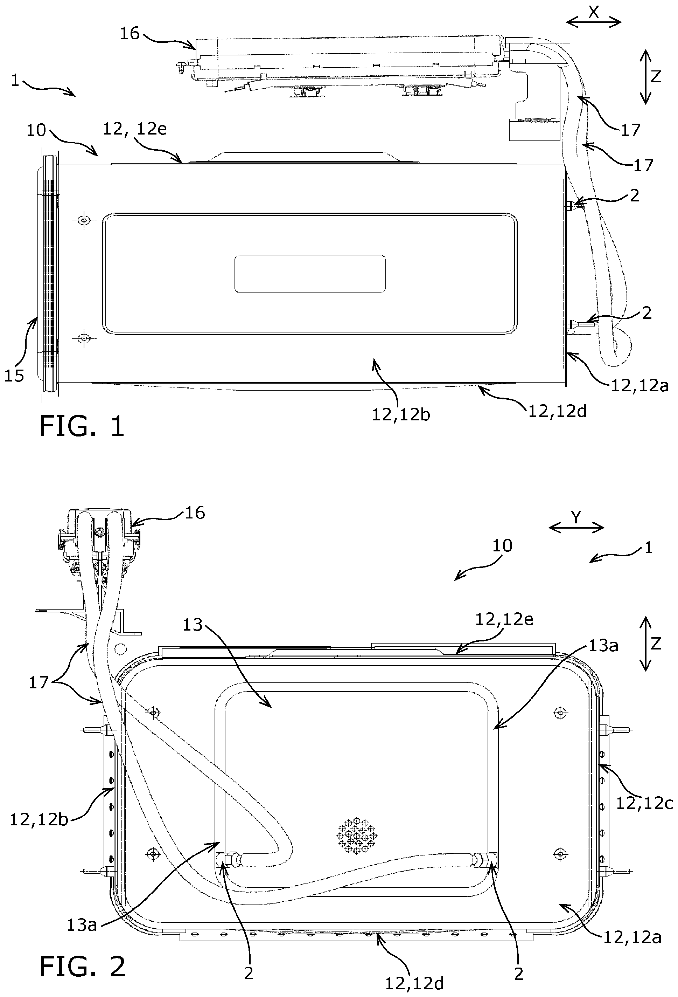

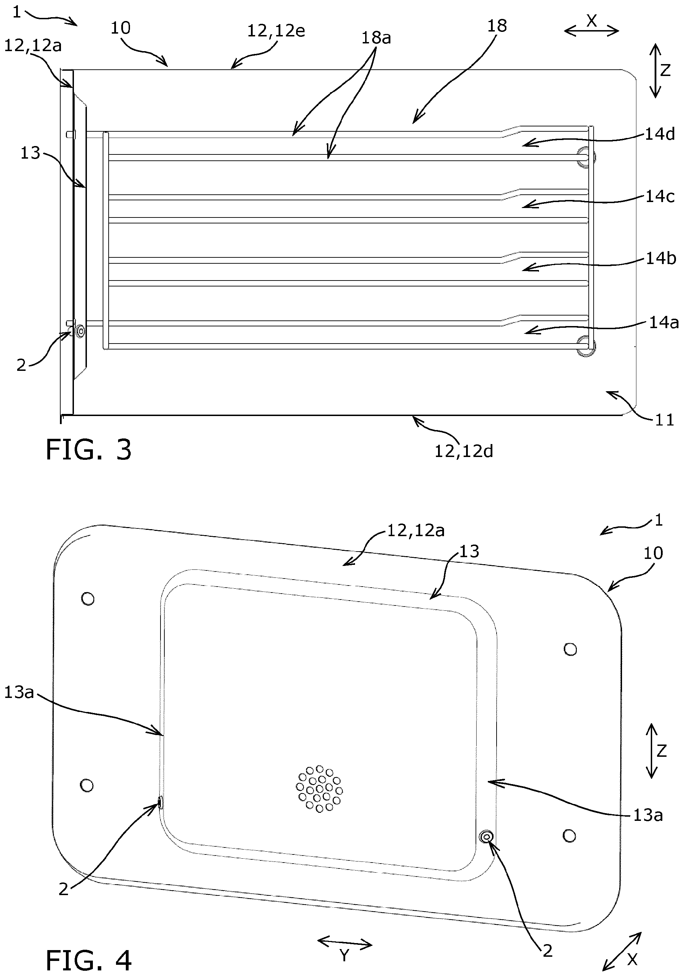

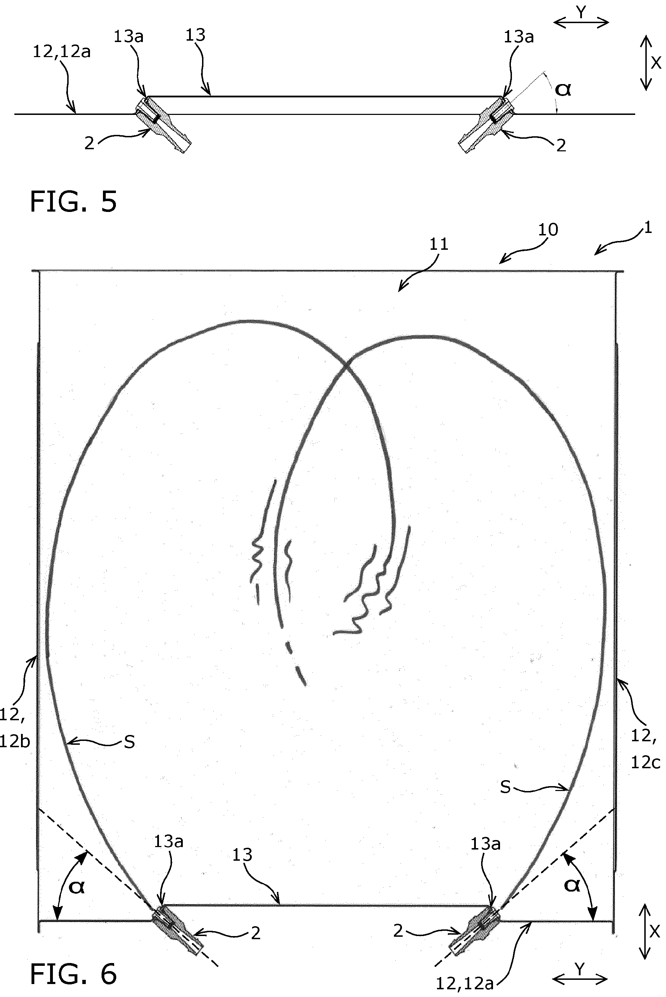

Fig. 1 zeigt eine Seitenansicht eines Gargeräts 1 mit Dampfgarfunktion. Fig. 2 zeigt eine Rückseitenansicht des Gargeräts 1 mit Dampfgarfunktion der Fig. 1. Fig. 3 zeigt einen Längsschnitt des Gargeräts 1 mit Dampfgarfunktion der Fig. 1. Fig. 4 zeigt eine innenseitige Ansicht der Garraumrückwand 12a des Gargeräts 1 mit Dampfgarfunktion der Fig. 1 von oben. Fig. 6 zeigt einen horizontalen Schnitt des Garraums 11 des Gargeräts 1 mit Dampfgarfunktion der Fig. 1.

Das Gargerät 1 mit Dampfgarfunktion, welches in den vorliegenden Ausführungsbeispielen betrachtet wird, kann auch als Dampfgarer 1 und insbesondere als kombinierter Dampfgarer 1 bezeichnet werden, welcher neben der Dampfgarfunktion auch eine Mikrowellenfunktion und gegebenenfalls eine Backfunktion aufweisen kann. Der Dampfgarer 1 weist ein Gehäuse 10 auf, welches metallisch ausgebildet ist. Das Gehäuse 10 umschließt im Wesentlichen einen Garraum 11, welcher rechteckig bzw. kastenförmig ausgebildet ist. Das Gehäuse 10 wird dabei im Wesentlichen von einer Wandung 12 gebildet, welche eine Garraumrückwand 12a, eine rechte Garraumseitenwand 12b, eine linke Garraumseitenwand 12c, einen Garraumboden 12d und eine Garraumdecke 12e aufweist.

In der Tiefe X ist der Garraum 11 nach vorne zum Benutzer hin offen ausgebildet und kann zum Betrieb mit einem Garraumverschluss 15 in Form einer Garraumklappe 15 verschlossen werden. Die Garraumklappe 15 kann hierzu z.B. mittels Scharnieren an einer der beiden Garraumseitenwände 12b, 12c angeordnet sein, so dass die Garraumklappe 15 durch seitliches Verschwenken oder durch Verschwenken nach unten hin vom Benutzer geöffnet werden kann, um den Garraum 11 zu erreichen und dort zu garende Lebensmittel anzuordnen bzw. von dort zu entnehmen. Anschließend kann die Garraumklappe 15 vor die Öffnung des Garraums 11 geschwenkt und dort verriegelt werden, um zum Beispiel den Dampfgarer 1 zu betreiben und im Garraum 11 aufgenommene Lebensmittel mittels Dampfgarfunktion bzw. mittels einer anderen Funktion des kombinierten Dampfgarers 1 zu garen.

Um die Dampfgarfunktion des Dampfgarers 1 zu realisieren, weist der Dampfgarer 1 eine Dampfquelle 16 in Form eines Dampferzeugers 16 auf, welcher oberhalb in der Höhe Z gegenüber dem Gehäuse 10 angeordnet ist. Der Dampf des Dampferzeugers 16 kann über zwei Dampfleitungen 17 in Form von Schläuchen 17 zur Garraumrückwand 12a geführt werden. Von dort kann der Dampf über jeweils ein Dampfeinlasselement 2, wie weiter unten näher erklärt werden wird, in den Garraum 11 eingeleitet werden.

Im Inneren des Garraums 11 sind an den beiden Garraumseitenwänden 12a, 12c jeweils mehrere Aufnahmeebenen 14a-14d angeordnet, welche durch jeweils zwei parallel zueinander laufende Metallschienen 18a eines metallischen Halterungselements 18 gebildet werden. Pro Garraumseitenwand 12b, 12c ist ein metallisches Halterungselement 18 angeordnet, welche derart zueinander ausgebildet sind, so dass die Aufnahmeebenen 14a-14d jeweils zwischen einem Paar von Halteschienen 18a ausgebildet werden. Die einzelnen Aufnahmeebenen 14a-14d sind in der Höhe Z zueinander gleichmäßig beabstandet angeordnet. Die die Aufnahmeebenen 14a-14d bildenden Metallschienen 18a sind paarweise ausgebildet und in der Breite Y zueinander parallel ausgerichtet. In den Aufnahmeebenen 14a-14d können Zubehörelemente des Dampfgarers 1 aufgenommen werden. Beispielsweise kann in einer ersten, untersten Aufnahmeebene 14a eine Tropfwanne aufgenommen werden (nicht dargestellt). In den darüberliegenden zweiten bis vierten Aufnahmeebenen 14b-14d kann jeweils ein Gargutbehälter bzw. ein Gargutträger aufgenommen werden (nicht dargestellt), in dem zuzubereitende Lebensmittel angeordnet sein können.

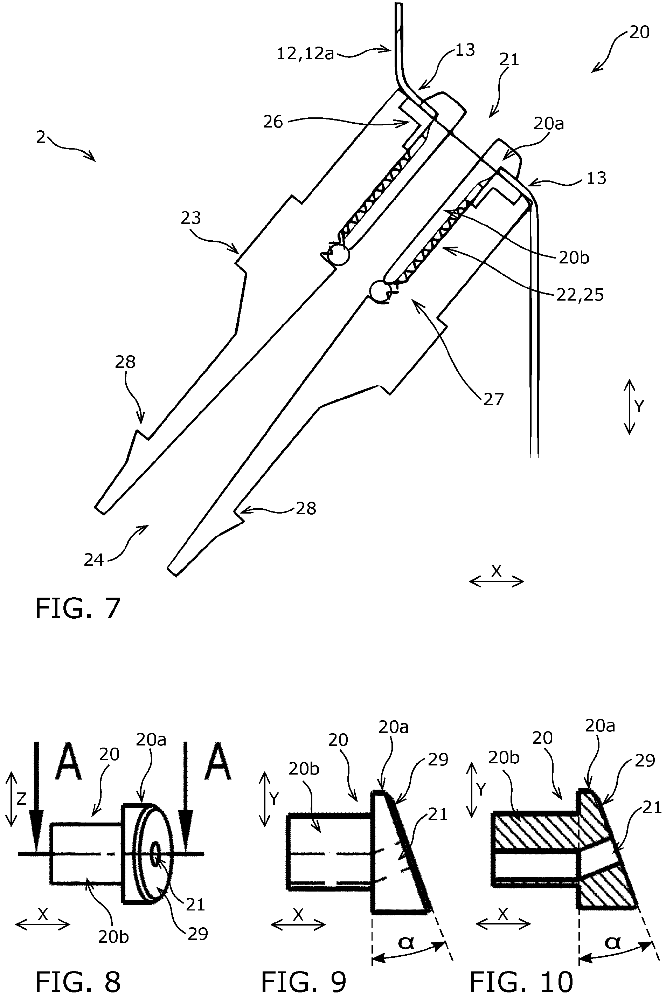

Zur Einleitung von Dampf in den Garraum 11 kann gemäß einem ersten Ausführungsbeispiel, wie es in den Fig. 1 bis 7 betrachtet wird, ein Dampfeinlasselement 2 in Form eines Dampfeinlasses 2 verwendet werden, wie es im Detail in der Fig. 7 dargestellt ist. Das Dampfeinlasselement 2 kann in seinem Verlauf geradlinig ausgebildet sein, um eine geradlinigen Führung des Dampfes in den Garraum 11 hinein zu ermöglichen.

Um einen Winkel α einzustellen, mit dem der Strömungspfad S des Dampfes in den Garraum 11 eintritt, kann gemäß dem ersten Ausführungsbeispiel die Garraumrückwand 12a eine Verprägung 13 aufweisen, siehe Fig. 4 bis 6. Diese Verprägung kann im Wesentlichen parallel zur Garraumrückwand 12a verlaufen, jedoch eine umlaufende Flanke 13a aufweisen, welche in dem Winkel α zur Tiefe X geneigt ist. Jeweils ein Dampfeinlasselement 2 kann an einer der beiden seitlichen Flanken 13a der Verprägung 13 angeordnet werden, so dass der Dampf in dem Winkel α von ca. 40° zu der Garraumrückwand 12a in den Garraum 11 eintreten kann. Hierdurch kann es zu einer stärkeren Durchwirbelung und Vermischung des Dampfes mit der Luft innerhalb des Garraums 11 kommen, wie durch die Strömungspfade S des Dampfes gemäß der Fig. 6 angedeutet wird.

Dabei können zwei Dampfeinlasselemente 2 verwendet werden, welche voneinander weg zeigend ausgerichtet und jeweils um den Winkel α zur Garraumrückwand 12a geneigt sind, siehe Fig. 5 und 6. Dies kann eine beidseitige Einleitung des Dampfes in den Garraum 11 in der horizontalen Ebene, in welcher die beiden Dampfeinlasselemente 2 angeordnet sind, ermöglichen. Hierdurch kann sich in dieser horizontalen Ebene innerhalb des Garraums 11 eine vergleichsweise besonders homogen verteilte Dampfschicht ausbilden. Da gleichzeitig die beiden Dampfeinlasselemente 2 oberhalb der ersten, untersten Aufnahmeebene 14a der Tropfwanne angeordnet sind, kann sich diese horizontal homogen verteilte Dampfschicht unmittelbar oberhalb der Tropfwanne (nicht dargestellt) ausbilden und von dort in der Höhe Z vertikal nach oben aufsteigen, um die Gargutbehälter der zweiten bis vierten Aufnahmeebene 14b-14d zu erreichen (nicht dargestellt). Dies kann insgesamt zu einer vergleichsweise homogenen Verteilung des Dampfes innerhalb des Garraums 11 führen.

Die winkelige Anordnung der Dampfeinlasselemente 2 an der Garraumrückwand 12a kann außerhalb des Garraums 11 auch zu einem verbesserten Verlauf der Schläuche 17 führen, da diese auf diese Art und Weise mit vergleichsweise großen Radien von 12 cm oder größer sowie tangentialer Zuleitung des Dampfes vom Dampferzeuger 16 zum Garraum 11 geführt werden können. Hierdurch können Engstellen bzw. Knickstellungen der Schläuche 17 vermieden werden, welche sich behindernd bzw. druckreduzierend auf den Dampf im Schlauch 17 auswirken können, so dass der Wirkungsgrad des Dampfgarers 1 gegenüber bekannten Geräten erhöht werden kann. Die Stelle mit dem geringsten Durchmesser des Schlauchverlaufs kann dabei unmittelbar an den Austritt der Schläuche 17 aus dem Dampferzeuger 16 hin verlegt werden, was die hierdurch bewirkten Druckverluste reduzieren kann.

Das Dampfeinlasselement 2 gemäß dem ersten Ausführungsbeispiel, wie in der Fig. 7 im Detail dargestellt, besteht im Wesentlichen aus einem Öffnungselement 20, welches einen Kopfbereich 20a sowie einen Körperbereich 20b aufweist. Der Kopfbereich 20a ist radial großflächiger ausgebildet als der Körperbereich 20b, so dass das Öffnungselement 20 von der Innenseite der Garraumrückwand 12a durch eine Durchgangsöffnung des Gehäuses 10 in diesem Bereich (nicht dargestellt) gesteckt werden kann, ohne durch die Durchgangsöffnung hindurchgelangen zu können. Hierdurch kann das Öffnungselement 20 durch ihren Kopfbereich 20a im Inneren des Garraums 11 gehalten werden.

Der Körperbereich 20b des Öffnungselements 20 kann von der Außenseite des Gehäuses 10, das heißt von außerhalb des Garraums 11, von einem Aufnahmeelement 23 aufgenommen werden. Der Körperbereich 20b des Öffnungselements 20 kann dabei entsprechend kleiner als das Aufnahmeelement 23 ausgebildet sein, so dass der Körperbereich 20b von dem Aufnahmeelement 23 umfasst und aufgenommen werden kann. Gleichzeitig kann das Aufnahmeelement 23 entsprechend des Kopfbereichs 20a des Öffnungselements 20 derart großflächig ausgebildet sein, so dass das Aufnahmeelement 23 von außerhalb des Garraums 11 an dem Gehäuse 10 anliegen kann. Auf diese Art und Weise kann der Rand der Durchgangsöffnung des Gehäuses 10 von der Innenseite des Garraums 11 von dem Kopfbereich 20a des Öffnungselements 20 sowie von der gegenüberliegenden Seite von dem Aufnahmeelement 23 zwischen sich eingeklemmt werden, was zu einem sicheren Halt des Dampfeinlasselements 2 in der Durchgangsöffnung des Gehäuses 10 führen kann.

Um das Öffnungselement 20 bzw. dessen Körperbereich 20b und das Aufnahmeelement 23 miteinander zu verbinden, kann beispielsweise der Körperbereich 20b ein Innengewinde 22 und das Aufnahmeelement 23 ein Außengewinde 25 aufweisen. Die beiden vorgefertigten Gewinde 22, 25 können ineinander verschraubt werden, so dass der zuvor beschriebene Halt zwischen dem Öffnungselement 20 und dem Aufnahmeelement 23 erreicht werden kann. Alternativ kann das Aufnahmeelement 23 auch einen glatten Bereich aufweisen, in den ein selbstschneidendes Innengewinde 22 des Öffnungselements 20 einschneiden kann. In diesem Fall kann das Aufnahmeelement 23 vorzugsweise aus einem Kunststoff ausgebildet sein. Hierdurch kann ebenfalls ein sicherer und gegebenenfalls einfacher herzustellender Halt zwischen dem Aufnahmeelement 23 und dem Öffnungselement 20 erreicht werden. Die Verschraubung des Öffnungselements 20 gegenüber dem Aufnahmeelement 23 weist neben der Einfachheit und Haltbarkeit der Verbindung auch den Vorteil auf, einem Benutzer keine Schweiß- oder Kleberückstände im Innern des Garraums 11 darbieten zu müssen. Dies kann zu einer "sauberen" Ansicht des Garraums 11 für den Benutzer führen und hierdurch den optischen Eindruck des Dampfgarers 1 für den Kunden erhöhen.

Zur Führung des Dampfes durch das Dampfeinlasselement 2 hindurch weist das das Aufnahmeelement 23 eine Durchgangsöffnung 24 in Form einer sich verjüngenden Düse oder alternativ und hier nicht dargestellt in Form einer zylindrischen Durchgangsöffnung auf, welche auch als Dampfkanal 24 bezeichnet werden kann. Der Dampfkanal 24 des Aufnahmeelements 23 ist dabei zum Öffnungselement 20 hin sich verjüngend ausgebildet, um eine Druckerhöhung bzw. Geschwindigkeitserhöhung des Dampfes zu erreichen. Dabei weist das schlauchseitige Ende der Durchgangsöffnung 24 einen größeren mittleren Durchmesser auf als das garraumseitige Ende der Durchgangsöffnung 24. Wobei der mittlere Durchmesser der Durchgangsöffnung 24 am schlauchseitigen Ende 1,5-fach bis dreifach so groß ist wie der mittlere Durchmesser der Durchgangsöffnung 24 am garraumseitigen Ende. Vorzugsweise ist der mittlere Durchmesser der Durchgangsöffnung 24 am schlauchseitigen Ende doppelt so groß wie der mittlere Durchmesser der Durchgangsöffnung 24 am garraumseitigen Ende. In der dargestellten Ausführungsform hat das schlauchseitige Ende der Durchgangsöffnung 24 vorzugsweise einen mittleren Durchmesser von größer 5 Millimeter, vorzugsweise von ungefähr 6 Millimeter. Das garraumseitige Ende der Durchgangsöffnung 24 hat vorzugsweise einen mittleren Durchmesser von weniger als 5 Millimeter, vorzugsweise ungefähr 3 Millimeter. Das Öffnungselement 20 weist durch ihren Körperbereich 20b sowie ihren Kopfbereich 20a hindurch eine Durchgangsöffnung 21 in Form einer zylindrischen Durchgangsöffnung 21 auf, welche als Dampfauslass 21 bezeichnet werden kann. Der Dampfkanal 24 des Aufnahmeelements 23 geht dabei in den Dampfauslass 21 des Öffnungselements 20 über, wobei der Dampfauslass 21 mit einem gegenüber dem schlauchseitigen Ende der Durchgangsöffnung 24 des Aufnahmeelements 23 stark verengten mittleren Durchmesser auf. Vorzugsweise ist der mittlere Durchmesser des Dampfauslass 21 zumindest im Übergangsbereich von Aufnahmeelement 23 zu Öffnungselement 20 identisch, und beträgt in dem gezeigten Ausführungsbeispiel 3 Millimeter. So kann eine entsprechend hohe Austrittsgeschwindigkeit des Dampfes in den Garraum 11 erzeugt werden, wenn der Dampf den Dampfauslass 21 am Kopfbereich 20a des Öffnungselements 20 verlässt.

Um dabei eine Dampfdichtigkeit des Dampfauslasselements 2 zwischen dem Öffnungselement 20 und dem Aufnahmeelement 23 sowie gegenüber dem Gehäuse 10 zu erreichen, sind zwei Dichtelemente 26, 27 in Form von O-Ringen 26, 27 vorgesehen. Ein Dichtelement 26 als äußeres Dichtelement 26 ist in Form eines äußeren O-Rings 26 außerhalb des Garraums 11 zwischen dem Gehäuse 10 und dem Aufnahmeelement 23 angeordnet. Dieser äußere O-Ring 26 wird durch das Anziehen des Öffnungselements 20 gegenüber dem Aufnahmeelement 23 zwischen dem Aufnahmeelement 23 und dem Gehäuse 10 eingeklemmt, so dass der äußere O-Ring 26 an dieser Stelle dampfdicht wirken kann. Vergleichbar ist das Dichtelement 27 in Form eines inneren Dichtelements 27 als innerer O-Ring 27 zwischen dem Öffnungselement 20 und dem Aufnahmeelement 23 im Innen des Dampfeinlasselements 2 angeordnet und wird ebenfalls durch das Anziehen des Öffnungselements 20 gegenüber dem Aufnahmeelement 23 dampfdichtend eingedrückt, so dass der innere O-Ring 27 vergleichbar dampfdicht an dieser Stelle wirken kann.

Das Aufnahmeelement 23 weist an ihrem dem Öffnungselement 20 abgewandten, schlauchseitigem Ende ein in Umfangsrichtung umlaufendes und radial nach außen zeigendes Halteelement 28 auf, welches der Halterung des Schlauches 17 dient. Das Halteelement 28 kann als Rastelement 28, als Widerhaken 28, als Vorsprung 28 bzw. als Hinterschnitt 28 ausgebildet sein und gegebenenfalls in seiner Wirkung durch eine Schelle verstärkt werden, welche auf dem entsprechenden Ende des Schlauches 17 angeordnet und angezogen sein kann, wenn das Ende des Schlauches 17 von dem Halteelement 28 aufgenommen wird. Die Schelle kann insbesondere dem Öffnungselement 20 zugewandt gegenüber dem Halteelement 28 angeordnet sein, um das Ende des Schlauches 17 oberhalb des Halteelements 28 halten zu können. Hierzu kann das Ende des Schlauches 17 auf das untere Ende des Aufnahmeelement 23 aufgeschoben und durch das Halteelement 28 von alleine oder durch die zuvor erwähnte Schelle gegen Abziehen gehalten werden. In der Darstellung der Fig. 7 ist das Halteelement 28 als Vorsprung 28 ausgebildet, welcher in seiner Wirkung durch die zuvor beschriebene Schelle verstärkt werden kann.

Fig. 8 zeigt eine Seitenansicht eines Dampfeinlasselements 2 des Gargeräts 1 mit Dampfgarfunktion gemäß einem zweiten Ausführungsbeispiel. Fig. 9 zeigt eine Draufsicht auf das Dampfeinlasselement 2 der Fig. 8. Fig. 10 zeigt einen horizontalen Schnitt des Dampfeinlasselements 2 der Fig. 8.

In diesem Fall wird die zuvor beschriebene Wirkung des Winkels α dadurch erreicht, dass der Kopfbereich 20a des Öffnungselements 20 gegenüber dem Körperbereich 20b einen entsprechend winkeligen Verlauf des Dampfauslasses 21 mit dem Winkel α aufweist. Mit anderen Worten verläuft der Dampfauslass 21 im Körperbereich 20b des Öffnungselements 20 zunächst geradlinig und knickt dann beim Übergang in den Kopfbereich 20a des Öffnungselements 20 um den Winkel α ab, so dass der Dampfauslass 21 um den Winkel α geneigt an einer entsprechenden Schrägfläche 29 des Kopfbereichs 20a aus dem Öffnungselement 20 austritt, siehe Fig. 9 und 10.

Auf diese Art und Weise kann die zuvor beschriebene Wirkung eines winkeligen austretenden Strömungspfads S des Dampfes in den Garraum 11 hinein erreicht werden, ohne an der Garraumrückwand 12a die Verprägung 13 gemäß dem ersten Ausführungsbeispiel vorsehen zu müssen. Dies kann die Umsetzung einer homogeneren Dampfverteilung im Garraum 11 vereinfachen.

Dabei besteht auch die Möglichkeit, die beiden zuvor beschriebenen Ausführungsbeispiele miteinander zu kombinieren, indem das Dampfeinlasselement 2 gemäß dem zweiten Ausführungsbeispiel an den Flanken 13a der Verprägung 13 des ersten Ausführungsbeispiels montiert wird. Werden die beiden Winkel α dabei in der Horizontalen ausgerichtet, kann beispielsweise eine Ablenkung des austretenden Strömungspfads S des Dampfes um den doppelten Winkel α gegenüber der Garraumrückwand 12a erreicht werden. Werden die beiden Winkel α gemäß dieser Ausführungsvariante gegenüber den Winkeln α der zuvor beschriebenen Ausführungsbeispiele halbiert, so können die dort beschriebenen Wirkungsweisen auch auf diese Art und Weise erreicht werden.

Alternativ können die beiden miteinander kombinierbaren Winkel α dazu verwendet werden, durch die Flanken 13a der Verprägung 13 eine horizontale winkelige Auslenkung des Strömungspfads S des Dampfes um den Winkel α und gleichzeitig durch die Schrägfläche 29 des Kopfbereichs 20a des Öffnungselements 20 eine vertikale Ausrichtung um den Winkel α zu bewirken. Hierdurch kann sowohl eine horizontale als auch vertikale Ablenkung des Strömungspfads S des Dampfes um jeweils den Winkel α erreicht werden, um eine entsprechende mehrdimensionale Verwirbelung und Vermischung des Dampfes in der Horizontalen und gleichzeitig in der Vertikalen innerhalb des Garraums 11 zu erreichen. Auch hierdurch kann die Dampfverteilung innerhalb des Garraums 11 gegenüber bekannten Dampfgarern 1 verbessert werden.

### Bezugszeichenliste (Bestandteil der Beschreibung)

- α: Winkel
- A: Schnitt
- S: Strömungspfad des Dampfes

- X: Längsrichtung; Tiefe
- Y: Querrichtung; Breite
- Z: vertikale Richtung; Höhe

- 1: Gargerät mit Dampfgarfunktion; (kombinierter) Dampfgarer
- 10: Gehäuse
- 11: Garraum
- 12: Wandungen
- 12a: Garraumrückwand
- 12b: rechte Garraumseitenwand
- 12c: linke Garraumseitenwand
- 12d: Garraumboden
- 12e: Garraumdecke
- 13: Verprägung
- 13a: Flanken der Verprägung 13
- 14a: erste (unterste) Aufnahmeebene (für Tropfwanne)
- 14b: zweite Aufnahmeebene (für Gargutbehälter/träger)
- 14c: dritte Aufnahmeebene (für Gargutbehälter/träger)
- 14d: vierte Aufnahmeebene (für Gargutbehälter/träger)
- 15: Garraumverschluss; Garraumklappe
- 16: Dampfquelle; Dampferzeuger
- 17: Dampfleitungen; Schläuche
- 18: Halterungselement
- 18a: Metallschienen

- 2: Dampfeinlasselemente; Dampfeinlässe
- 20: Öffnungselemente
- 20a: Kopfbereich
- 20b: Körperbereich
- 21: Durchgangsöffnung bzw. Dampfauslass eines Öffnungselements 20
- 22: Innengewinde eines Öffnungselements 20
- 23: Aufnahmeelement
- 24: Durchgangsöffnung bzw. Dampfkanal eines Aufnahmeelements 23
- 25: Außengewinde eines Aufnahmeelements 23
- 26: (äußeres) Dichtelement; (äußerer) O-Ring
- 27: (inneres) Dichtelement; (innerer) O-Ring
- 28: Halteelement; Rastelement; Widerhaken; Vorsprung; Hinterschnitt
- 29: Schrägfläche des Kopfbereichs 20a des Öffnungselements 20

## Patentansprüche

1. Gargerät (1) mit Dampfgarfunktion
mit einem Garraum (11), welcher ausgebildet ist, zuzubereitende Lebensmittel aufzunehmen,
wobei der Garraum (11) im Wesentlichen von einem Gehäuse (10) umschlossen wird, mit einer Dampfquelle (16), welche ausgebildet ist, Dampf zur Zubereitung der Lebensmittel zu erzeugen, und
mit wenigstens einem Dampfeinlasselement (2), welches ausgebildet und angeordnet ist,
zumindest einen Teil des Dampfs der Dampfquelle (16) durch das Gehäuse (10) hindurch in den Garraum (11) zu führen,
das Dampfeinlasselement (2) ein Öffnungselement (20) aufweist, welches zumindest abschnittsweise im Inneren des Garraums (11) angeordnet ist,
wobei zumindest der im Garraum (11) angeordnete Abschnitt des Öffnungselements (20) aus Metall, vorzugsweise aus Edelstahl, ausgebildet ist,
wobei das Öffnungselement (20) wenigstens eine Durchgangsöffnung (21) aufweist,
welche ausgebildet ist, Dampf der Dampfquelle (16) durch das Gehäuse (10) hindurch in den Garraum (11) zu führen**,dadurch gekennzeichnet, dass**
das Dampfeinlasselement (2) ein Aufnahmeelement (23) aufweist, welches das Öffnungselement (20) aufnimmt und hält,
wobei das Aufnahmeelement (23) zumindest im Wesentlichen, vorzugsweise vollständig, außerhalb des Garraums (11) angeordnet ist,
das Aufnahmeelement (23) wenigstens eine Durchgangsöffnung (24) aufweist, welche ausgebildet ist, Dampf der Dampfquelle (16) dem Öffnungselement (20) zuzuführen,
wobei die Durchgangsöffnung (24) zum Öffnungselement (20) hin sich verjüngend ausgebildet ist und
wobei das Aufnahmeelement (23) mit wenigstens einer Dampfleitung (17) verbunden ist.

2. Gargerät (1) nach Anspruch 1, wobei das Dampfeinlasselement (2) an einer Wandung (12), vorzugsweise an einer Flanke (13a) einer Verprägung (13) einer Wandung (12), des Gehäuses (10) derart angeordnet, so dass das Dampfeinlasselement (2) den Dampf in einem Winkel (α) zur Wandung (12) des Gehäuses (10) in den Garraum (11) führen kann, wobei der Winkel (α) ungleich 90° ist, wobei der Winkel (α) zwischen dem Dampfeinlasselement (2) und der Wandung (12) dadurch umgesetzt ist, indem die Wandung (12) in einem Bereich der Verprägung (13) gegenüber dem übrigen Bereich der Wandung (12) um den Winkel (α) geneigt ist.

3. Gargerät (1) nach Anspruch 2, wobei das Öffnungselement (20) einen Kopfbereich (20a) aufweist, welcher sich von innerhalb des Garraums (11) gegen das Gehäuse (10) abstützt, und dass
sich das Aufnahmeelement (23) von außerhalb des Garraums (11) gegen das Gehäuse (10) abstützt.

4. Gargerät (1) nach einem der vorhergehenden Ansprüche, wobei das Aufnahmeelement (23) zumindest abschnittsweise, vorzugsweise im Wesentlichen, vorzugsweise vollständig, aus Kunststoff ausgebildet ist.

5. Gargerät (1) nach einem der vorhergehenden Ansprüche, wobei das Öffnungselement (20) ein Außengewinde (25), vorzugsweise ein selbstschneidendes Außengewinde (25), aufweist,
wobei vorzugsweise das Aufnahmeelement (23) ein Innengewinde (22) aufweist.

6. Gargerät (1) nach dem vorhergehenden Anspruch, wobei das schlauchseitige Ende der Durchgangsöffnung (24) einen größeren mittleren Durchmesser aufweist als ein garraumseitiges Ende der Durchgangsöffnung (24), insbesondere ist der mittlere Durchmesser der Durchgangsöffnung (24) am schlauchseitigen Ende 1,5-fach bis dreifach so groß ist wie der mittlere Durchmesser der Durchgangsöffnung (24) am garraumseitigen Ende.

7. Gargerät (1) nach einem der vorangehenden Ansprüche, **dadurch gekennzeichnet, dass**
das Dampfeinlasselement (2) derart ausgebildet ist, dass das Dampfeinlasselement (2) den Dampf zumindest im Wesentlichen in einem Winkel (α) zu einer Wandung (12), vorzugsweise zu einer Flanke (13a) einer Verprägung (13) einer Wandung (12), des Garraums (11) in den Garraum (11) führen kann,
wobei der Winkel (α) ungleich 90°, vorzugsweise zwischen 15° und 65°, vorzugsweise zwischen 20° und 60°, vorzugsweise zwischen 30° und 50°, vorzugsweise 40°, beträgt, wobei der Winkel (α) vorzugsweise in der Horizontalen ausgerichtet ist.

8. Gargerät (1) nach einem der vorhergehenden Ansprüche, wobei die Durchgangsöffnung (21) des Öffnungselements (20) einen mittleren Durchmesser von weniger als 4 Millimeter, vorzugsweise von ungefähr 3 Millimeter aufweist, und die Länge der Durchgangsöffnung (21) in dem aus Metall gefertigten Öffnungselement (20) wenigstens 9 Millimeter, vorzugsweise mehr als 12 Millimeter, bevorzugt 15 Millimeter aufweist.

9. Gargerät (1) nach einem der vorangehenden Ansprüche, **wobei** das Dampfeinlasselement (2) an einer Garraumrückwand (12a) des Gehäuses (10) angeordnet ist.

10. Gargerät (1) nach einem der vorangehenden Ansprüche, **wobei** wenigstens zwei Dampfeinlasselemente (2) vorgesehen sind,
wobei die Winkel (α) der beiden Dampfeinlasselemente (2) vorzugsweise voneinander weg ausgerichtet sind.

11. Gargerät (1) nach einem der vorangehenden Ansprüche, **wobei** das Dampfeinlasselement (2) in der Höhe (Z) oberhalb einer ersten Aufnahmeebene (14a) und unterhalb einer darüber liegenden zweiten Aufnahmeebene (14b) angeordnet ist,
wobei die erste Aufnahmeebene (14a) vorzugsweise die unterste Aufnahmeebene (14a) ist.

## Claims

1. Cooking appliance (1) having a steam cooking function,
comprising a cooking chamber (11) which is designed to accommodate food to be prepared,
the cooking chamber (11) being substantially enclosed by a housing (10),
comprising a steam source (16) which is designed to generate steam for preparing the food, and
comprising at least one steam inlet element (2) which is designed and arranged to guide at least some of the steam from the steam source (16) through the housing (10) into the cooking chamber (11),
the steam inlet element (2) has an opening element (20) which is arranged at least partially in the interior of the cooking chamber (11),
at least the portion of the opening element (20) arranged in the cooking chamber (11) being made of metal, preferably of stainless steel,
the opening element (20) having at least one through-opening (21) which is designed to guide steam from the steam source (16) through the housing (10) into the cooking chamber (11), **characterised in that**
the steam inlet element (2) has a receiving element (23) which receives and holds the opening element (20),
the receiving element (23) being arranged at least substantially, preferably completely, outside the cooking chamber (11),
the receiving element (23) has at least one through-opening (24) which is designed to supply steam from the steam source (16) to the opening element (20), the through-opening (24) being tapered towards the opening element (20) and the receiving element (23) being connected to at least one steam line (17).

2. Cooking appliance (1) according to claim 1, wherein the steam inlet element (2) is arranged on a wall (12), preferably on a flank (13a) of an embossed portion (13) of a wall (12), of the housing (10) in such a way that the steam inlet element (2) can guide the steam into the cooking chamber (11) at an angle (α) to the wall (12) of the housing (10), wherein the angle (α) is not equal to 90°, wherein the angle (α) between the steam inlet element (2) and the wall (12) is realised by the wall (12) being inclined by the angle (α) in a region of the embossed portion (13) relative to the remaining region of the wall (12).

3. Cooking appliance (1) according to claim 2, **wherein** the opening element (20) has a head region (20a) which is supported against the housing (10) from within the cooking chamber (11), and in that
the receiving element (23) is supported against the housing (10) from outside the cooking chamber (11).

4. Cooking appliance (1) according to any of the preceding claims, **wherein** the receiving element (23) is formed at least partially, preferably substantially, preferably completely, from plastics material.

5. Cooking appliance (1) according to any of the preceding claims, **wherein** the opening element (20) has an external thread (25), preferably a self-tapping external thread (25),
wherein preferably the receiving element (23) has an internal thread (22).

6. Cooking appliance (1) according to the preceding claim, **wherein** the hose-side end of the through-opening (24) has a larger average diameter than a cooking chamber-side end of the through-opening (24), in particular the average diameter of the through-opening (24) at the hose-side end is 1.5 times to three times as large as the average diameter of the through-opening (24) at the cooking chamber-side end.

7. Cooking appliance (1) according to any of the preceding claims,
**characterised in that** the steam inlet element (2) is designed such that the steam inlet element (2) can guide the steam into the cooking chamber (11) at least substantially at an angle (α) to a wall (12), preferably to a flank (13a) of an embossed portion (13) of a wall (12), of the cooking chamber (11),
the angle (α) being not equal to 90°, preferably between 15° and 65°, preferably between 20° and 60°, preferably between 30° and 50°, preferably 40°, the angle (α) being preferably aligned horizontally.

8. Cooking appliance (1) according to any of the preceding claims, wherein the through-opening (21) of the opening element (20) has an average diameter of less than 4 millimetres, preferably of approximately 3 millimetres, and the length of the through-opening (21) in the opening element (20) made of metal is at least 9 millimetres, preferably more than 12 millimetres, preferably 15 millimetres.

9. Cooking appliance (1) according to any of the preceding claims, **wherein** the steam inlet element (2) is arranged on a cooking chamber rear wall (12a) of the housing (10).

10. Cooking appliance (1) according to any of the preceding claims, **wherein** at least two steam inlet elements (2) are provided,
wherein the angles (α) of the two steam inlet elements (2) are preferably oriented away from each other.

11. Cooking appliance (1) according to any of the preceding claims, **wherein** the steam inlet element (2) is arranged at a height (Z) above a first receiving plane (14a) and below a second receiving plane (14b) located thereabove, wherein the first receiving plane (14a) is preferably the lowest receiving plane (14a).

## Revendications

1. Appareil de cuisson (1) comportant une fonction de cuisson à la vapeur
comportant un espace de cuisson (11) qui est réalisé pour recevoir des aliments à préparer,
dans lequel l'espace de cuisson (11) est sensiblement entouré par un boîtier (10),
comportant une source de vapeur (16) qui est réalisée pour générer de la vapeur pour la préparation des aliments, et
comportant au moins un élément d'admission de vapeur (2) qui est réalisé et disposé de manière à guider au moins une partie de la vapeur de la source de vapeur (16) à travers le boîtier (10) tout au long de l'espace de cuisson (11),
l'élément d'admission de vapeur (2) présente un élément à ouverture (20) qui est disposé au moins dans certaines sections à l'intérieur de l'espace de cuisson (11),
dans lequel au moins la section de l'élément à ouverture (20) disposée dans l'espace de cuisson (11) est réalisée en métal, de préférence en acier inoxydable,
dans lequel l'élément à ouverture (20) présente au moins une ouverture de passage (21) qui est réalisée pour guider de la vapeur de la source de vapeur (16) à travers le boîtier (10) tout au long de l'espace de cuisson (11), **caractérisé en ce que**
l'élément d'admission de vapeur (2) présente un élément de réception (23) qui reçoit et maintient l'élément à ouverture (20),
dans lequel l'élément de réception (23) est disposé au moins sensiblement, de préférence complètement, à l'extérieur de l'espace de cuisson (11),
l'élément de réception (23) présente au moins une ouverture de passage (24) qui est réalisée pour amener de la vapeur de la source de vapeur (16) vers l'élément à ouverture (20), dans lequel l'ouverture de passage (24) est réalisée pour se rétrécir vers l'élément à ouverture (20) et dans lequel l'élément de réception (23) est relié à au moins une conduite de vapeur (17).

2. Appareil (1) selon la revendication 1, dans lequel l'élément d'admission de vapeur (2) est disposé sur une paroi (12), de préférence sur un flanc (13a) d'un estampage (13) d'une paroi (12) du boîtier (10), de telle sorte que l'élément d'admission de vapeur (2) peut conduire la vapeur dans l'espace de cuisson (11) à un angle (α) par rapport à la paroi (12) du boîtier (10), dans lequel l'angle (α) n'est pas de 90°, dans lequel l'angle (α) entre l'élément d'admission de vapeur (2) et la paroi (12) est mis en œuvre en inclinant la paroi (12) à l'angle (α) dans une zone de l'estampage (13) par rapport à la zone restante de la paroi (12).

3. Appareil de cuisson (1) selon la revendication 2, **dans lequel** l'élément à ouverture (20) présente une zone formant tête (20a) qui s'appuie contre le boîtier (10) depuis l'intérieur de l'espace de cuisson (11), **et en ce que**
l'élément de réception (23) s'appuie contre le boîtier (10) depuis l'extérieur de l'espace de cuisson (11).

4. Appareil de cuisson (1) selon l'une des revendications précédentes,
**dans lequel** l'élément de réception (23) est réalisé au moins dans certaines sections, de préférence sensiblement, de préférence complètement, en matière plastique.

5. Appareil de cuisson (1) selon l'une des revendications précédentes, **dans lequel** l'élément à ouverture (20) présente un filetage extérieur (25), de préférence un filetage extérieur autotaraudeur (25),
dans lequel, de préférence, l'élément de réception (23) présente un filetage interne (22).

6. Appareil de cuisson (1) selon la revendication précédente, **dans lequel** l'extrémité côté tuyau de l'ouverture de passage (24) présente un diamètre moyen plus grand qu'une extrémité côté espace de cuisson de l'ouverture de passage (24), en particulier le diamètre moyen de l'ouverture de passage (24) au niveau de l'extrémité côté tuyau est 1,5 fois à trois fois plus grand que le diamètre moyen de l'ouverture de passage (24) au niveau de l'extrémité coté espace de cuisson.

7. Appareil de cuisson (1) selon l'une des revendications précédentes,
**caractérisé en ce que** l'élément d'admission de vapeur (2) est réalisé de telle sorte que l'élément d'admission de vapeur (2) peut guider la vapeur dans l'espace de cuisson (11) au moins sensiblement à un angle (α) par rapport à une paroi (12), de préférence par rapport à un flanc (13a) d'un estampage (13) d'une paroi (12) de l'espace de cuisson (11),
dans lequel l'angle (α) n'est pas de 90°, est de préférence entre 15° et 65°, de préférence entre 20° et 60°, de préférence entre 30° et 50°, de préférence de 40°, dans lequel l'angle (α) est de préférence orienté à l'horizontale.

8. Appareil de cuisson (1) selon l'une des revendications précédentes, dans lequel l'ouverture de passage (21) de l'élément à ouverture (20) présente un diamètre moyen inférieur à 4 millimètres, de préférence d'environ 3 millimètres, et la longueur de l'ouverture de passage (21) dans l'élément à ouverture (20) fabriqué en métal présente au moins 9 millimètres, de préférence plus de 12 millimètres, de préférence 15 millimètres.

9. Appareil de cuisson (1) selon l'une des revendications précédentes, **dans lequel** l'élément d'admission de vapeur (2) est disposé sur une paroi arrière d'espace de cuisson (12a) du boîtier (10).

10. Appareil de cuisson (1) selon l'une des revendications précédentes,
**dans lequel** au moins deux éléments d'admission de vapeur (2) sont prévus,
dans lequel les angles (α) des deux éléments d'admission de vapeur (2) sont de préférence orientés l'un par rapport à l'autre.

11. Appareil de cuisson (1) selon l'une des revendications précédentes,
**dans lequel** l'élément d'admission de vapeur (2) est disposé au niveau de la hauteur (Z) au-dessus d'un premier niveau de réception (14a) et en dessous d'un second niveau de réception (14b) placé au-dessus de lui, dans lequel le premier niveau de réception (14a) est de préférence le niveau de réception (14a) le plus bas.
